(19) Europäisches Patentamt
European Patent Office
Office européen des brevets

(11) **EP 4 101 897 A1**

(12) **EUROPEAN PATENT APPLICATION**
published in accordance with Art. 153(4) EPC

(43) Date of publication:
**14.12.2022 Bulletin 2022/50**

(21) Application number: 21750436.4

(22) Date of filing: **01.02.2021**

(51) International Patent Classification (IPC):
$C08L\ 83/04^{(2006.01)}$    $H01B\ 1/04^{(2006.01)}$
$H01B\ 1/24^{(2006.01)}$    $H01B\ 5/16^{(2006.01)}$
$C08K\ 3/04^{(2006.01)}$    $C08K\ 3/08^{(2006.01)}$

(52) Cooperative Patent Classification (CPC):
C08K 3/04; C08K 3/08; C08L 83/04; H01B 1/04;
H01B 1/24; H01B 5/16

(86) International application number:
**PCT/JP2021/003602**

(87) International publication number:
**WO 2021/157537 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.02.2020 JP 2020019965**

(71) Applicant: **Zeon Corporation
Tokyo 100-8246 (JP)**

(72) Inventors:
• **TAKEYAMA Yoshihisa
Tokyo 100-8246 (JP)**
• **SHUTO Shigeru
Tokyo 100-8246 (JP)**

(74) Representative: **Gerstberger, Gisela
Maiwald GmbH
Elisenhof
Elisenstraße 3
80335 München (DE)**

(54) **RUBBER COMPOSITION AND ELECTRODE**

(57) A rubber composition includes a silicone rubber and a conductive filler. The content of the conductive filler in the rubber composition is 0.5 to 5 volume%. The conductive filler contains carbon nanotubes having a length of greater than 5 μm The radius of gyration which is de- termined by subjecting the rubber composition to ultra-small angle X-ray scattering to obtain a scattering curve, and analyzing the scattering curve with the Beau- cage model is 40 nm to 300 nm.

EP 4 101 897 A1

**Description**

TECHNICAL FIELD

The present disclosure relates to a rubber composition and an electrode.

BACKGROUND

Conventional techniques which achieve both flexibility (lower hardness) and conductivity (lower volume resistivity) at higher levels through addition of carbon nanotubes (hereinafter referred to as "CNTs" where necessary) serving as a conductive filler to a silicone rubber have been disclosed (see PTL 1).

CITATION LIST

Patent Literature

WO 2016/136275 A

SUMMARY

(Technical Problem)

Although the technique disclosed in PTL 1 can provide both the flexibility and the conductivity at higher levels, further improvement has been required. Specifically, when the composition is molded into a sheet to obtain a molded body and the molded body is subjected to deformation such as in the case of a bending test, for example, the volume resistivity of the molded body may increase.

It would be helpful to provide a rubber composition which is excellent in both flexibility and conductivity and which can maintain a sufficient conductivity even when a molded body made from the rubber composition is deformed by bending it or the like, for example, and an electrode formed from the rubber composition.

(Solution to Problem)

The present inventor has intensively studied for the purpose of solving the above-mentioned problem, and has found that a rubber composition which is excellent in flexibility and conductivity and can maintain a sufficient conductivity even when the molded body made from the rubber composition is deformed, by blending a certain amount of a conductive filler containing certain CNTs into a silicone rubber and adjusting the radius of gyration determined by subjecting the rubber composition to the ultra-small angle X-ray scattering so as to fall within a predetermined range, and has thus completed the present disclosure.

A rubber composition of the present disclosure is a rubber composition comprising a silicone rubber and a conductive filler, wherein a content of the conductive filler in the rubber composition is 0.5 to 5 volume%, the conductive filler comprises carbon nanotubes having a length of greater than 5 $\mu$m, and a radius of gyration is 40 nm to 300 nm, the radius of gyration being determined by subjecting the rubber composition to ultra-small angle X-ray scattering to obtain a scattering curve, and analyzing the scattering curve with the Beaucage model. According to the present disclosure, the conductivity can be sufficiently maintained even when the molded body is deformed while excellent flexibility and conductivity are both provided.

In the present disclosure, the silicone rubber is preferably a liquid silicone rubber having a viscosity of 0.1 to 1,000 mPa·s at 25 °C. With such a configuration, the flexibility and the conductivity of the rubber composition can be well balanced at even higher levels.

The carbon nanotubes preferably exhibit a convex upward shape in a t-plot obtained from an adsorption isotherm. Further, the carbon nanotubes preferably comprise single-walled carbon nanotubes. With such configurations, because the amount of the conductive filler added can be reduced to a relatively small amount, the flexibility and the conductivity of the rubber composition can be well balanced at even higher levels.

The conductive filler may further comprise a metal-based conductive material such as metal particles, in addition to the CNTs. With such a configuration, adjustment of the conductivity is relatively facilitated.

Here, the rubber composition of the present disclosure may be an uncrosslinked rubber composition before being subjected to crosslinking, or may be a crosslinked rubber product after being subjected to crosslinking. Irrespective of whether the rubber composition is an uncrosslinked rubber composition or a crosslinked rubber product, it has the above-described characteristics. In other words, the following inventions (1) and (2) can be given.

(1) An uncrosslinked rubber composition of the present disclosure is rubber composition comprising a silicone rubber and a conductive filler, wherein a content of the conductive filler in the rubber composition is 0.5 to 5 volume%, the conductive filler comprises carbon nanotubes having a length of more than 5 $\mu$m, and a radius of gyration is 40 nm to 300 nm, the radius of gyration being determined by subjecting the rubber composition to ultra-small angle X-ray scattering to obtain a scattering curve, and analyzing the scattering curve with the Beaucage model.

(2) A crosslinked rubber product of the present disclosure is a rubber composition comprising a silicone rubber and a conductive filler, wherein a content of the conductive filler in the rubber composition is 0.5 to 5 volume%, the conductive filler comprises carbon nanotubes having a length of more than 5 $\mu$m, and a radius of gyration is 40 nm to 300 nm, the radius of gyration being determined by subjecting the rubber composition to ultra-small angle X-ray scattering to obtain a scattering curve, and analyzing the scattering curve with the Beaucage model.

The crosslinked rubber product is preferably used as an electrode. In this case, the electrode is preferably used as an electrode that is brought into a contact with a living body such as a human body to detect signals such as electric signals from the living body. The electrode of the present disclosure is excellent in flexibility and conductivity, and the ratio of change in conductivity upon being deformed is small. Thus, the electrode is useful because it can maintain a sufficient conductivity while having an excellent followability to the living body, and signals from the living body can be detected with high sensitivity.

(Advantageous Effect)

According to the present disclosure, provided are a rubber composition and an electrode which are excellent in both flexibility and conductivity and which can maintain a sufficient conductivity even when a molded body is deformed by bending it or the like by applying an external force. As described above, because the rubber composition or the like can maintain a sufficient conductivity even after it is deformed, e.g., even when the rubber composition or the like is disposed in a mold or the like and used as an electrode that is brought into contact with a human body or the like, it is advantageous in that an excellent followability to protrusions and recesses of the mold is achieved, and electric signals from a human body can be detected with a high sensitivity.

DETAILED DESCRIPTION

Embodiments of the present disclosure will be described in detail below.

A rubber composition of the present disclosure includes a silicone rubber and a conductive filler, wherein a content of the conductive filler in the rubber composition is 0.5 to 5 volume%, the conductive filler includes carbon nanotubes having a length of more than 5 $\mu$m, and a radius of gyration is 40 nm to 300 nm, the radius of gyration being determined by subjecting the rubber composition to ultra-small angle X-ray scattering to obtain a scattering curve, and analyzing the scattering curve with the Beaucage models.

<Silicone rubber>

The silicone rubber is not particularly limited. Silicone rubbers known in the art can be used, e.g., polymers which are generally well-known as organopolysiloxanes and contain an alkylsiloxane unit such as dimethylsiloxane as the main component. The silicone rubber may have, in addition to the alkylsiloxane unit, small amounts of other structural units and may further have small amounts of functional groups. Further, where desired, the silicone rubber may be blended with additives known in the art, such as reinforcing fillers and/or lubricants. Examples of usable reinforcing fillers include reinforcing silica, quartz powder, iron oxide, alumina, and vinyl group-containing silicone resins. Specifically, as the silicone rubber, millable silicone rubber or liquid silicone rubber can be used, for example. Of such silicone rubbers, a liquid silicone rubber is preferably used as the silicone rubber. As used herein, a millable silicone rubber refers to a silicone rubber which has high viscosity and is a non-liquid (a solid or paste) having no self-fluidity at 25 °C. Furthermore, a liquid silicone rubber refers to a silicone rubber which has a viscosity of 0.1 to 7,000 mPa·s at 25 °C at a rotation speed of 6 rpm, and has self-fluidity.

An organopolysiloxane has an organic group. The organic group is a monovalent substituted or unsubstituted hydrocarbon group. Examples of the unsubstituted hydrocarbon groups include alkyl groups such as a methyl group, an ethyl group, a propyl group, a butyl group, a hexyl group, and a dodecyl group, an aryl group such as a phenyl group, and an aralkyl group such as a β-phenylethyl group and a β-phenylpropyl group. Examples of the substituted hydrocarbon group include a chloromethyl group and a 3,3,3-trifluoropropyl group. In general, an organopolysiloxane having a methyl group as the organic group is widely used because of ease of synthesis and so forth. The organopolysiloxane is preferably linear, but may be branched or cyclic.

The organopolysiloxane has a certain reactive group (functional group) depending on the crosslinking mechanism (curing mechanism) thereof. Examples of the reactive group include an alkenyl group (such as a vinyl group, an allyl group, a butenyl group, a pentenyl group, or a hexenyl group) and a silanol group. The organopolysiloxane having an alkenyl group is crosslinked through a peroxide crosslinking reaction using an organic peroxide serving as a crosslinking agent or an addition reaction using an organosiloxane having a hydrosilyl group (organohydrogenpolysiloxane) serving as a crosslinking agent. In the addition reaction, a hydrosilylation catalyst may also be used in combination. An organopolysiloxane having a silanol group is crosslinked through a condensation reaction. In the condensation reaction, a crosslinking agent for condensation crosslinking may also be used in combination.

An organopolysiloxane having an alkenyl group preferably has at least two alkenyl groups in one molecule. Further, an organopolysiloxane having a hydrosilyl group preferably has at least two hydrosilyl groups in one molecule. Further, an organopolysiloxane having a silanol group preferably has at least two silanol groups in one molecule.

Examples of the organic peroxide include benzoyl peroxide, 2,4-dichlorobenzoylperoxide, p-methylbenzoylperoxide, o-methylbenzoylperoxide, dicumyl peroxide, cumyl-t-butylperoxide, 2,5-dimethyl-2,5-di-t-butylperoxyhexane, and di-t-butylperoxide. Of these, preferred are dicumyl peroxide, cumyl-t-butylperoxide, 2,5-dimethyl-2,5-di-t-butylperoxyhexane, and di-t-butylperoxide because of a particularly low compression strain given by these.

The amount of the organic peroxide added is not particularly limited, but is typically within the range of 0.1 to 10 parts by mass per 100 parts by mass of the organopolysiloxane having an alkenyl group.

Specific examples of the organopolysiloxane having a hydrosilyl group (organohydrogenpolysiloxane) include a methylhydrogensiloxane copolymer having a trimethylsiloxy group at each terminal, a dimethylsiloxane-methylhydrogensiloxane copolymer having a dimethylhydrogensiloxy group at each terminal, a methylhydrogensiloxane-phenylsiloxane copolymer having trimethylsiloxy groups at each terminal, a methylhydrogensiloxane-diphenylsiloxane-dimethylsiloxane copolymer having a trimethylsiloxy group at each terminal, a copolymer consisting of $(CH_3)_2HSiO1/2$ units and $SiO4/2$ units, and a copolymer consisting of $(CH_3)_2HSiO1/2$ units, $SiO4/2$ units, and $(C_6H_5)SiO3/2$ units.

The amount of the organopolysiloxane having a hydrosilyl group to be blended is not particularly limited, but is typically within the range of 0.1 to 40 parts by mass per 100 parts by mass of the organopolysiloxane having an alkenyl group.

Examples of the hydrosilylation catalyst include a platinum-based catalyst. Examples of the platinum-based catalyst include fine particle platinum, platinum black, platinum-supported on activated carbon, platinum-supported on silica, platinic chloride, an alcohol solution of platinic chloride, an olefin complex of platinum, and an alkenylsiloxane complex of platinum.

The amount of the hydrosilylation catalyst added is not particularly limited, but is typically within the range of 1 ppm to 2 parts by mass per 100 parts by mass of the organopolysiloxane having an alkenyl group in terms of the amount of metal in the platinum-based metal.

As the condensation crosslinking agent, a silane having two or more, preferably three or more hydrolyzable groups in one molecule, or a partially hydrolyzed condensate thereof is used. In this case, examples of the hydrolyzable groups include an alkoxy group such as a methoxy group, an ethoxy group, and a butoxy group; a ketoxime group such as a dimethyl ketoxime group and a methyl ethyl ketoxime group; an acyloxy group such as an acetoxy group; an alkenyl oxy group such as an isopropenyloxy group and an isobutenyloxy group; an amino group such as an N-butylamino group and an N,N-diethylamino group; and an amide group such as an N-methylacetamide group.

The amount of the condensation crosslinking agent added is not particularly limited, but is typically within the range of 1 to 50 parts by mass per 100 parts by mass of the organopolysiloxane having a silanol group.

<Conductive filler>

The conductive filler is a filler which is capable of imparting conductivity to the silicone rubber to which the filler is added. The amount of the conductive filler added to the rubber composition of the present disclosure needs to be 0.5 volume% or more with respect to the sum of the volumes of the silicone rubber and the conductive filler. In particular, the amount of the conductive filler is preferably 0.6 volume% or more, more preferably 0.7 volume% or more, and may be 1 volume% or more. Further, the amount of the conductive filler added to the rubber composition of the present disclosure needs to be 5 volume% or less. In particular, the amount is preferably 3 volume% or less, more preferably 2.5 volume% or less, and may be 2 volume% or less. When the amount of the conductive filler added is within any of the above ranges, the flexibility and the conductivity can be both achieved at even higher levels.

An example of the conductive filler contains carbon nanotubes (CNTs) as an essential material, and examples other than CNTs include, for example, a carbon-based conductive material and a metal-based conductive material.

Examples of the carbon-based conductive material which can be used include a particulate carbon material and a fibrous carbon material. There is no limitation on the particulate carbon material. Examples of the particulate carbon material which can be used include graphite such as artificial graphite, flake graphite, flaked graphite, natural graphite, acid-treated graphite, expandable graphite, and expanded graphite; and carbon black. These may be used alone or two or more of these may be used in combination.

Any fibrous carbon material other than carbon nanotubes can be used. Examples of the fibrous carbon material which can be used include vapor grown carbon fibers, carbon fibers obtained by carbonization of organic fibers, and chopped products of these. These may be used alone or two or more of these may be used in combination.

Although the shape (particulate or fibrous shape), the dimension, and the like of the metal-based conductive material are not particularly limited, the metal-based conductive material is preferably metal particles. The metal-based conductive material may contain at least one selected from the group consisting of gold, silver, copper, platinum, palladium, rhodium, ruthenium, iridium, osmium, tungsten, nickel, tantalum, bismuth, lead, indium, tin, zinc, and titanium. Of these, at least one selected from the group consisting of gold, silver, copper, and platinum is preferably contained, and more preferably silver is contained in view of an excellent balance between the conductivity and the cost. Because the metal-based conductive material is superior to CNTs in conductivity, adjustment of the conductivity of the rubber composition at a high level becomes relatively easy as compared with the case where only CNTs are used. Metal-based conductive materials, on the other hand, may inhibit crosslinking of an uncrosslinked rubber composition when certain types of crosslinking agents are used. From such a viewpoint, it is preferable that no metal-based conductive material is added (or the metal-based conductive material is added in a considerable trace amount) .

<Carbon nanotubes>

Examples of the carbon nanotubes (CNTs) which can be used include single-walled carbon nanotubes (single-walled CNTs), multi-walled carbon nanotubes (multi-walled CNTs), and a mixture of single-walled CNTs and multi-walled CNTs. Here, the content ratio of single-walled CNTs in the aforementioned carbon nanotubes is preferably 50% by mass or more, more preferably 70% by mass or more, and even more preferably 90% by mass or more.

Additionally, the CNTs preferably exhibit a convex upward shape in a t-plot obtained from an adsorption isotherm. Especially, it is preferred that the CNTs have not undergone opening formation treatment and exhibit a convex upward shape in a t-plot. With such a configuration, the flexibility of a crosslinked rubber product obtained through crosslinking of a rubber composition of the present disclosure can be improved.

The t-plot is obtained from an adsorption isotherm measured by the nitrogen gas adsorption method by converting the relative pressure to an average thickness t (nm) of the nitrogen gas adsorbed layer. Specifically, from a known standard isotherm in which the average thickness t of a nitrogen gas adsorbed layer plotted is against the relative pressure $P/P_0$, the average thickness t of the nitrogen gas adsorbed layer corresponding to a given relative pressure is calculated, which is then subjected to the above-mentioned conversion, to thereby obtain a t-plot of the CNTs (t-plot method of de Boer et al.).

For a sample having pores on the surface thereof, the growth of the nitrogen gas adsorbed layer is categorized into the following steps (1) to (3) below. The gradient of the t-plot changes in accordance with the steps (1) to (3).

(1) a step in which a single molecular adsorbed layer of nitrogen molecules is formed over the entire surface;
(2) a step in which a multi-molecular adsorbed layer is formed which is accompanied by capillary condensation filling of pores; and
(3) a step in which a multi-molecular adsorped layer is formed at a surface that appears to be non-porous due to the pores being filled by nitrogen.

A t-plot having a convex upward shape shows a straight line crossing the origin in the region in which the average thickness t of the nitrogen gas adsorbed layer is small. However, as t increases, the plot deviates downward from the straight line. CNTs exhibiting such a t-plot curve have a large internal specific surface area relative to total specific surface area of the CNTs, indicating the presence of a large number of openings formed in the CNTs. As a result, the CNTs have an even lower tendency to aggregate.

The bending point of the t-plot of the CNTs is preferably positioned within a range of $0.2 \leq t$ (nm) $\leq 1.5$, more preferably within a range of $0.45 \leq t$ (nm) $\leq 1.5$, and even more preferably within a range of $0.55 \leq t$ (nm) $\leq 1.0$. When the bending point of the t-plot is positioned within any of the above ranges, the property of the CNTs is further improved. As used herein, the "position of the bending point" is defined as an intersection point of an approximated straight line A at the aforementioned step (1) and an approximated straight line B at the aforementioned step (3).

Furthermore, in the CNT, a ratio of the internal specific surface area S2 relative to the total specific surface area S1 (S2/S1) obtained from the t-plot is preferably 0.05 or more, more preferably 0.06 or more, and even more preferably 0.08 or more, and is preferably 0.30 or less. When S2/S1 is 0.05 or more and 0.30 or less, the properties of the CNTs can be further improved.

Measurement of an adsorption isotherm, preparation of a t-plot, and calculation of total specific surface area S1 and the internal specific surface area S2 based on an analysis on the t-plot for the CNTs may be made using, for example, BELSORP®-mini (BELSORP is a registered trademark in Japan, other countries, or both), which is a commercially available measurement instrument (manufactured by Bel Japan Inc.).

The CNTs are preferably CNTs of which the ratio ($3\delta$/Av) of the standard deviation ($\delta$) of the diameter multiplied by 3 ($3\delta$) relative to the average diameter (Av) is greater than 0.20 and less than 0.80, more preferably CNTs of which $3\delta$/Av is greater than 0.25, even more preferably CNTs of which $3\delta$/Av is greater than 0.40, and particularly preferably CNTs of which $3\delta$/Av is greater than 0.50. When CNTs of which $3\delta$/Av is greater than 0.20 and less than 0.80 is used, the flexibility and the conductivity of the rubber composition can be well balanced at even higher levels.

Herein, the "average diameter (Av) of CNTs" and the "standard deviation of the diameter ($\delta$: sample standard deviation) of CNTs" can each be obtained by measuring the diameters (external diameters) of 100 randomly selected CNTs under observation by a transmission electron microscope (TEM). The average diameter (Av) and the standard deviation ($\delta$) of the CNTs may be adjusted by changing the production method and the production conditions of the CNTs, or may be adjusted by combining a plurality of types of CNTs obtained by different production methods.

The BET specific surface area of the CNTs is preferably 200 $m^2$/g or more, more preferably 600 $m^2$/g or more, and even more preferably 800 m2/g or more, and is preferably 2,500 $m^2$/g or less, and more preferably 1,500 $m^2$/g or less. When the BET specific surface area of the CNT is within any of the above ranges, dispersibility of the CNT into the silicone rubber is improved and the flexibility and the conductivity of the rubber composition can be well balanced at even higher levels. The BET specific surface area of CNTs can be measured by using a BET specific surface area measuring device (HM model-1210 manufactured by Mountech Co., Ltd.) which is in accordance with JIS Z8830, for example.

The average diameter (Av) of the CNTs is preferably 0.5 nm or more, and more preferably 1 nm or more, and is preferably 15 nm or less, more preferably 10 nm or less, and even more preferably 5 nm or less. When the average diameter (Av) of the CNTs is within any of the above ranges, the balance between the flexibility and the conductivity can be further improved.

Further, the CNTs need to have a length (average length) of more than 5 $\mu$m upon synthesis. In particular, the length thereof upon synthesis is preferably 50 $\mu$m or more, more preferably 100 $\mu$m or more, and even more preferably 300 $\mu$m or more. The CNTs become more susceptible to damages such as breakage and cutting during dispersion as the length upon synthesis increases. Thus, the length of the CNTs upon synthesis is preferably 5,000 mm or less. From the viewpoint of enhancing dispersibility into the silicone rubber, the average length of the CNT upon synthesis is more preferably 1,000 $\mu$m or less. The average length of the CNTs is obtained by measuring the lengths of 100 randomly-selected CNTs under observation by scanning electron microscopy (SEM).

The aspect ratio (length/diameter) of the CNTs is preferably more than 10. The aspect ratio of the CNTs can be determined by calculating the average of ratios of length to diameter (length/diameter) from the diameters and lengths measured as described above .

The CNTs preferably have a G/D ratio of 0.8 or more and 15.0 or less, more preferably 2.0 or more and 10.0 or less, and even more preferably 2.5 or more and 4.5 or less. When the G/D ratio is within any of the above ranges, dispersibility into the silicone rubber can be further increased. In the present disclosure, the "G/D ratio" refers to the ratio of the intensity of the G band peak observed in the vicinity of 1590 $cm^{-1}$ to the intensity of the D band peak observed in the vicinity of 1340 $cm^{-1}$ in a Raman spectrum, and can be measured using, for example, a microscopic laser Raman spectrophotometer (Nicolet Almega XR manufactured by Thermo Fisher Scientific Inc.).

The CNTs having the properties set forth above can, for example, be efficiently produced by, in a method in which, during synthesis of CNTs through chemical vapor deposition (CVD) by supplying a feedstock compound and a carrier gas onto a substrate having a catalyst layer for CNT production at the surface thereof in the presence of a trace amount of an oxidizing agent (catalyst activating material) in the system to thereby significantly improve the catalytic activity of the catalyst layer (super growth method; refer to WO 2006/011655 A1), forming the catalyst layer on the substrate surface by a wet process. Hereinafter, carbon nanotubes obtained by the super growth method may also be referred to as "SGCNTs."

The content ratio of the carbon nanotubes in the conductive filler is preferably 1% or more, more preferably 1.5% or more, when the total mass of the conductive filler is taken to be 100%. The conductive filler may be all carbon nanotubes.

<Other additives>

The rubber composition of the present disclosure may contain other additives than the conductive filler. Example of the other additives include cross-linking agents, antioxidants, and hardness modifiers such as silicone oils. The other additives can be blended in any amount as long as the effect of the present disclosure is not compromised. Examples of cross-linking agents include peroxide-based cross-linking agents, polyol-based cross-linking agents, thiocyanate-based cross-linking agents, and platinum compound-based cross-linking agents. Examples of antioxidants include phenol-based antioxidants, phosphorus-based antioxidants, and sulfur-based antioxidants.

<Rubber composition>

The rubber composition of the present disclosure needs to have a radius of gyration 40 nm to 300 nm, where the radius of gyration is determined by subjecting the rubber composition to the ultra-small angle X-ray scattering to obtain a scattering curve, and analyzing the scattering curve with the Beaucage model. Methods of the measurement by the ultra-small angle X-ray scattering and the analysis will be described later

<Crosslinked rubber product>

A crosslinked rubber product can be obtained by adding the aforementioned crosslinking agent to the rubber composition which is an uncrosslinked product, followed by crosslinking. Note that crosslinking may be performed in a single stage composed of primary crosslinking, or may be performed in two stages composed of primary crosslinking and secondary crosslinking, or may be performed in three or more stages. Such a crosslinked rubber product has a radius of gyration to be described later of 40 to 300 nm. Alternatively, the crosslinked rubber product may be obtained by adding a crosslinking agent to the rubber composition which is an uncrosslinked product having a radius of gyration to be described later of 40 to 300 nm, followed by crosslinking.

<Physical properties of crosslinked rubber product>

The crosslinked rubber product preferably has a hardness serving as an index of the flexibility of 60 or less, more preferably 50 or less, and even more preferably 40 or less. The crosslinked rubber product preferably has a volume resistivity serving as an index of the conductivity of $5 \times 10^1$ $\Omega$·cm or less, more preferably $1 \times 10^1$ $\Omega$·cm or less, and more preferably $5 \times 10^0$ $\Omega$·cm or less. Further, the crosslinked rubber product preferably has a rate of change in volume resistivity before and after a bending test, which will be describe later, of 1.6 or less, more preferably 1.3 or less, and even more preferably 1.2 or less. When all of these physical properties are satisfied, sufficient flexibility and conductivity are provided and a sufficient conductivity can be maintained even when an external force is applied.

<Applications of crosslinked rubber product>

Applications of a cross-linked product made from the rubber composition of the present disclosure are not limited. The cross-linked product can be used, for example, as an electrode that is brought into a contact with a human body to detect electrical signals from the human body in a wearable device.

EXAMPLES

The present disclosure will now be described below based on examples. However, present disclosure is not limited to the examples disclosed herein. In the following description, "%" and "parts" used in expressing quantities are by mass, unless otherwise specified.

In Examples and Comparative Examples, the radius of gyration (corresponding to the radius of the CNT bundle radius contained) in each sheet-like crosslinked product, the hardness, the volume resistivity, and the ratio of change in volume resistivity upon being bent at 180 ° of the sheet-like crosslinked product, which was a crosslinked rubber product formed into a sheet, were measured or evaluated according to the following methods.

<Radius of gyration>

Each prepared silicone rubber composition was charged into a mold and vulcanized to mold a sheet-like crosslinked product having a thickness of 2 mm (150 mm in width and 150 mm in length). Note that the vulcanization conditions were 15 minutes and 100 °C. A small angle X-ray scattering (SAXS) measurement was performed on the produced crosslink product under the following conditions.

«Conditions for small angle X-ray scattering measurement»

Beamline: Hyogo Beamline BL08B2
Energy: 8.27 keV
Distance from molded sample to detector: 16 m
X-ray irradiation time: 60 seconds

q (wave number) range: 0.005 nm$^{-1}$ to 0.3 nm$^{-1}$
Detector: PILATUS-1M

«Data processing of data obtained by small-angle X-ray scattering measurement»

A scattered image obtained by the small-angle X-ray scattering measurement according to the above procedure was unidimensionalized by determining an annular average from -180 to 180 ° to obtain a scattered profile. The radius of gyration $R_{g,i}$ (nm) was obtained by fitting the scatter profile obtained across a wavenumber range of 0.006 nm$^{-1}$ to 0.15 nm$^{-1}$ using the Beaucage modeling equation (Expression 1) using analysis software Igor Pro7 (developed by WaveMetrics Inc.).

$$I(q) = Bkgd. + \sum_{i=1}^{N} \left[ G_i \exp\left(-\frac{q^2 R_{g,i}^2}{3}\right) + B_i \left[ \frac{\left[ \mathrm{erf}\left(\frac{q R_{g,i}}{\sqrt{6}}\right)^3 \right]^{P_i}}{q} \right] \right]$$

Expression 1

where I(q) is the scattering intensity, q is the wave number (nm$^{-1}$), Pi is the fractal dimension associated with each hierarchy, and N is the number of hierarchies and N = 2. The fitting was carried out so that $\chi_2$ representing the scattering profile error between the actual measured value and the calculated value was 100 or less. Fitting is considered to be satisfactory when $\chi_2$ is 100 or less. The radius of gyration $R_{g,i}$ (nm) represents the CNT bundle radius, and a smaller $R_{g,i}$ indicates a higher degree of defiberization of CNTs.

<Hardness>

Each prepared silicone rubber composition was charged into a mold and vulcanized to mold a sheet-like crosslinked product having a thickness of 2 mm (150 mm in width and 150 mm in length). Note that the vulcanization conditions were 15 minutes and 100 °C. The hardness of the produced crosslinked product was measured using a type A durometer in accordance with JIS K 6253-3, and an average of measured hardness values was calculated and recorded as the hardness of the crosslinked product.
Here, the hardness indicative of the flexibility needs to be 60 or less.

<Volume resistivity>

Each prepared silicone rubber composition was charged into a mold and vulcanized to mold a sheet-like crosslinked product having a thickness of 2 mm (150 mm in width and 150 mm in length). Note that the vulcanization conditions were 15 minutes and 100 °C. Next, from the prepared sheet-like crosslinked product, square test specimens of 50 mm × 50 mm were cut out for use as measurement samples. The volume resistivity of each sample was measured by a method in accordance with JIS K 7194 using a low resistivity meter (Loresta® MCP-T610 (Loresta is a registered trademark in Japan, other countries, or both), Mitsubishi Chemical Analytech Co., Ltd.). Specifically, the measurement sample was secured on an insulating board, and the volume resistivity of each measurement sample was measured at 9 arbitrary points by applying a voltage of up to 90 V. The average of the measured values was calculated and recorded as the volume resistivity ($\rho_{V1}$) of the sheet-like crosslinked product. The LSP probe was selected to be used as the four-point probe of the low resistivity meter.
Here, the volume resistivity indicative of the conductivity needs to be 5 × 10$^1$ Ω·cm or less.

<Ratio of change in volume resistivity when being bent at 180 °>

A square test piece having a dimension of 50 mm × 50 mm was prepared in the same manner as the measurement sample prepared in the volume resistivity measurement. This test piece was used as a measurement sample. The test piece was bent at an angle of 180 ° over 1 to 2 seconds, and the four-end needle probe (PSP probe) of the low resistivity meter (Loresta® MCP-T610, Mitsubishi Chemical Analytech Co., Ltd.) was brought into contact with the portion bent at 180 ° to measure the volume resistivity when being bent at 180 °. The volume resistivity of each measurement sample was measured at 9 arbitrary points by applying a voltage of up to 90 V. The average of the measured values was determined and recorded as the volume resistivity ($\rho_{V2}$) when being bent at 180°.

The ratio of change in volume resistivity (Δρ, %) when being bent at 180° was determined from the following equation.

$$\Delta\rho = \rho_{V2} / \rho_{V1} \times 100$$

Here, the volume resistivity indicative of the conductivity needs to be 1.6 or less.

(Example 1)

To methyl ethyl ketone (9960 g) as a solvent, SGCNTs (trade name: "ZEONANO SG101", Zeon Nanotechnology, Co. Ltd., average diameter (Ds): 4 nm, BET specific surface area: 1315 m$^2$/g, and length: 300 μm, having a t-plot exhibiting a convex upward shape) as carbon nanotubes containing single-walled CNTs (40 g) were added and the mixture was stirred for 15 minutes using a stirrer (LABOLUTION® (LABOLUTION is registered trademark in Japan, other countries, or both), manufactured by PRIMIX Corporation). Moreover, the solution containing the SGCNTs was subjected to a dispersion treatment at 100 MPa with a wet jet mill (trade name: "L-ES007", manufactured by Yoshida Kikai Co., Ltd.) to obtain a dispersion-treated solution containing methyl ethyl ketone and SGCNTs.

Next, to 500 g of the resultant dispersion-treated solution containing methyl ethyl ketone and SGCNTs, 100 g of a liquid silicone rubber A liquid (trade name: "KE-109E-A", manufactured by Shin-Etsu Chemical Co., Ltd.) having a viscosity of 1,000 mPa·s under the conditions of 25 °C and a rotational speed of 6 rpm was added, followed by stirring for 15 minutes to obtain a dispersion solution containing the liquid silicone rubber A and the SGCNTs. Thereafter, the resultant dispersion was allowed to stand so that the solvent was dried out, and then further dried under reduced pressure at 60 °C for 12 hours to obtain a mixture 1A of liquid silicone rubber A liquid and SGCNTs.

In the similar manner, 100 g of a liquid silicone rubber B liquid (trade name: "KE-109E-B", manufactured by Shin-Etsu Chemical Industry Co., Ltd.) was added to 500 g of the dispersion-treated solution containing methyl ethyl ketone and SGCNTs, and the mixture was stirred for 15 minutes to obtain a dispersion containing the liquid silicone rubber B liquid and the SGCNTs. Thereafter, the resultant dispersion was allowed to stand so that the solvent was dried out, and then further dried under reduced pressure at 60 °C for 12 hours to obtain a mixture 1B of liquid silicone rubber B liquid and SGCNTs,

Thereafter, 100 g of the mixture 1A of the liquid silicone rubber A liquid and the SGCNTs and 100 g of the mixture 1B of the liquid silicone rubber B liquid and the SGCNTs were mixed. The obtained mixture was then charged into a mold having a thickness of 2 mm, a width of 150 mm, and a length of 150 mm and heated at 100 °C for 15 minutes to obtain a sheet-like crosslinked product. The obtained sheet-like cross-linked product was used to measure the radius of gyration in the cross-linked product (corresponding to the CNT bundle radius), and the hardness, the volume resistivity, and the ratio of change in volume resistivity when being bent at 180 ° of the cross-linked product. The results are summarized in Table 1.

(Example 2)

A sheet-like crosslinked product was prepared in the same manner as in Example 1, except that 100 g of the liquid silicone rubber A and B liquids and 250 g of the dispersion-treated solution containing methyl ethyl ketone and SGCNTs were added so that the amount of the SGCNTs added was 1 parts by mass per 100 parts by mass of the liquid silicone rubber upon preparing the mixture. Each measurement was then performed in the same way as in Example 1. The results are summarized in Table 1.

(Example 3)

A sheet-like crosslinked product was prepared in the same manner as in Example 1, except that 100 g of the liquid silicone rubber A and B liquids and 125 g of the dispersion-treated solution containing methyl ethyl ketone and SGCNTs were added so that the amount of the SGCNTs added was 0.5 parts by mass per 100 parts by mass of the liquid silicone rubber, and 20 g of silver particles (trade name: "SPH02J", manufactured by Mitsui Mining & Smelting Co., Ltd.) as metal particles were further added, upon preparing the mixture. Each measurement was then performed in the same way as in Example 1. The results are summarized in Table 1.

(Example 4)

A sheet-like crosslinked product was produced in the same manner as in Example 1, except that 100 g of the liquid silicone rubber A and B liquids and 250 g of the dispersion-treated solution containing methyl ethyl ketone and carbon nanotubes were added so that the amount of SGCNTs added was 1 part by mass and the amount of MWCNTs added (trade name: "K-nanos 100P", manufactured by Kumho Petrochemical Co. Ltd.; average diameter (Ds): 12 nm, BET specific surface area: 259 $m^2$/g, G/D ratio: 0.9, and length: 35 $\mu$m) was 1 part by mass per 100 parts by mass of the liquid silicone rubber upon preparing the mixture. Each measurement was then performed in the same way as in Example 1. The results are summarized in Table 1.

(Example 5)

A sheet-like crosslinked product was produced in the same manner as in Example 1, except that 100 g of the liquid silicone rubber A and B liquids and 250 g of the dispersion-treated solution containing methyl ethyl ketone and SGCNTs were added so that the amount of MWCNTs added (trade name: "K-nanos 100P", manufactured by Kumho Petrochemical Co. Ltd.; average diameter (Ds):12 nm, BET specific surface area: 259 $m^2$/g, G/D ratio: 0.9, length: 35 $\mu$m) as carbon nanotubes was 2 parts by mass per 100 parts by mass of the liquid silicone rubber upon preparing the mixture. Each measurement was then performed in the same way as in Example 1. The results are summarized in Table 1.

(Comparative Example 1)

To 9,800 g of cyclohexane, 190 g of millable silicone rubber (trade name: "SH831 U", manufactured by Dow Corning Toray Co., Ltd.) was added and made to be dissolved by stirring for 48 hours. After 10 g of SGCNTs was added to the resulting silicone rubber solution, stirring was carried out for 15 minutes using a stirrer (LABOLUTION®, manufactured by PRIMIX Corporation). Moreover, the solution obtained by adding SGCNTs was subjected to a dispersion treatment at 120 MPa with a wet jet mill (trade name: "L-ES007", manufactured by Yoshida Kikai Co., Ltd.). Thereafter, the resultant solution containing the millable silicone rubber and the SGCNTs was added dropwise to a mixed solution of 10,000 g 2-propanol and 40,000 g methanol to afford a black solid. The obtained black solid substance was then dried at 60 °C for 48 hours under a reduced pressure to obtain a mixture of millable silicone rubber and SGCNTs.

Then, to 126 g of the resultant mixture of millable silicone rubber and SGCNTs, 80 g of a millable silicone rubber (trade name: "SH831U", manufactured by Toray Dow Corning Co., Ltd.) and 1.5 g of a crosslinking agent (trade name: "RC-4 (50P)", manufactured by Toray Dow Corning Co., Ltd.) were kneaded using a 6-inch open roll to obtain a composition of the millable silicone rubber and the SGCNTs.

Then, the obtained composition was charged into a mold having a thickness of 2 mm, a width of 150 mm, and a length of 150 mm, and crosslinked for 15 minutes at 160 °C under a pressure of 10 MPa to obtain a primary vulcanized sheet. The sheet was allowed to stand in a geer oven at 200 °C for 4 hours to obtain a secondary vulcanized sheet-like crosslinked product. The obtained sheet-like crosslinked product was used to measure the hardness, the volume resistivity, and the ratio of change in volume resistivity when being bent at 180 ° of the crosslinked product. The results are summarized in Table 1.

(Comparative Example 2)

A sheet-like crosslinked product was prepared in the same manner as in Example 1, except that 100 g of the liquid silicone rubber A and B liquids and 2,000 g of the dispersion-treated solution containing methyl ethyl ketone and SGCNTs were added so that the amount of the SGCNTs added was 8 parts by mass per 100 parts by mass of the liquid silicone rubber upon preparing the mixture. Each measurement was then performed in the same way as in Example 1. The results are summarized in Table 1.

(Comparative Example 3)

A sheet-like crosslinked product was prepared in the same manner as in Example 1, except that 100 g of the liquid silicone rubber A and B liquids and 25 g of the dispersion-treated solution containing methyl ethyl ketone and SGCNTs were added so that the amount of the SGCNTs added was 0.1 parts by mass per 100 parts by mass of the liquid silicone rubber upon preparing the mixture. Each measurement was then performed in the same way as in Example 1. The results are summarized in Table 1.

(Comparative Example 4)

A sheet-like crosslinked product was prepared in the same manner as in Example 1, except that Ketjen black (trade name: "EC300JD", manufactured by Lion Corporation) was used instead of the SGCNTs and 100 g of the liquid silicone rubber A and B liquids and 375 g of the dispersion-treated solution containing methyl ethyl ketone and Ketjen black were added so that the amount of Ketjen black added was 3 parts by mass per 100 parts by mass of the liquid silicone rubber upon preparing the mixture. Each measurement was then performed in the same way as in Example 1. The results are summarized in Table 1.

(Comparative Example 5)

A sheet-like cross-linked product was produced in the same manner as in Example 1 except that multi-welled CNTs (trade name: "NC7000", manufactured by Nanocyl SA, having a length of 2 μm) was used instead of the SGCNTs containing single-welled CNTs. Each measurement was then performed in the same way as in Example 1. The results are summarized in Table 1.

Table 1

| | | Example 1 | Example 2 | Example 3 | Example 4 | Example 5 | Comp. Example 1 | Comp. Example 2 | Comp. Example 3 | Comp. Example 4 | Comp. Example 5 |
|---|---|---|---|---|---|---|---|---|---|---|---|
| Silicone rubber (in parts by mass) | Millable | - | - | - | - | - | 100 | - | - | - | - |
| | Liquid | 100 | 100 | 100 | 100 | 100 | | 100 | 100 | 100 | 100 |
| Conductive filler (in parts by mass) | CNTs SG101 (Length: 300 μm) | 2 | 1 | 0.5 | 1 | - | 3 | 8 | 0.1 | - | - |
| | MWCNTs NC7000 (Length: 2 μm) | - | - | - | - | - | - | - | - | - | 2 |
| | MWCNTs K-nanos 100P (Length: 35 μm) | - | - | - | 1 | 2 | - | - | - | - | - |
| | Ketjen black EC300JD | - | - | - | - | - | - | - | - | 3 | - |
| | Silver particles | - | - | 20 | - | - | - | - | - | - | - |
| Volume fraction of conductive filler | Vol% | 1.4 | 0.7 | 2.6 | 1.4 | 1.4 | 2.1 | 5.3 | 0.1 | 1.8 | 1.4 |
| Radius of gyration | nm | 120 | 135 | 158 | 95 | 80 | 32 | 110 | 153 | - | 31 |
| Hardness (A) | Duro-A | 39 | 31 | 30 | 36 | 32 | 52 | 80 | 24 | 30 | 28 |
| Volume resistivity (B) | $\Omega\cdot cm$ | $4.5 \times 10^{-1}$ | 1.1 | $8.0 \times 10^{-1}$ | $8.3 \times 10^{-1}$ | 7.0 | 5.5 | $4.0 \times 10^{-2}$ | $1.8 \times 10$ | $1.6 \times 10^{10}$ | $1.0 \times 10^{8}$ |
| Ratio of range in volume resistivity (volume resistivity when bent at 180°) / (initial volume resistivity) | | 0.9 | 1.3 | 1.4 | 1.1 | 1.6 | 1.9 | 1.0 | 83.4 | 625 | 140 |

As can be seen from Examples 1 to 5 in Table 1, a hardness of 60 or less, a volume resistivity of $5.0 \times 10^1$ (Ω·cm) or less, and a ratio of change in volume resistivity of 1.6 or less were achieved when the conductive filler containing the CNTs having a length of more than 5 μm were added in the amount ranging from 0.5 to 5 volume%, and when the measured result of the radius of gyration in the rubber compositions was adjusted so as to fall within the range of 40 to 300 nm. Thus, an excellent balance between the flexibility and the conductivity was achieved, and the conductivity was maintained at a sufficient level even when an external force was applied.

As can be seen from Comparative Example 1 in Table 1, when the radius of gyration was less than 40 nm, the ratio of change in volume resistivity was inferior although the hardness was low indicating an excellent flexibility and the volume resistivity was low indicating a sufficient conductivity.

As can be seen from Comparative Example 2 in Table 1, when the amount of the conductive filler exceeded 5 volume%, the hardness was high indicating inferior flexibility although the volume resistivity and the ratio of change in volume resistivity were excellent.

As can be seen from Comparative Example 3 in Table 1, when the amount of the conductive filler was less than 0.5 volume%, the ratio of change in volume resistivity was inferior although the hardness was low indicating an excellent flexibility and the volume resistivity was low indicating an excellent conductivity.

As can be seen from Comparative Example 4 in Table 1, when the conductive filler contained no CNTs, both the volume resistivity and the ratio of change in volume resistivity were inferior although the hardness was low indicating an excellent flexibility.

As can be seen from Comparative Example 5 in Table 1, when the length of the CNT contained in the conductive filler was 5 μm or less and the radius of gyration was less than 40 nm, both the volume resistivity and the ratio of change in volume resistivity were inferior although the hardness was low indicating an excellent flexibility.

INDUSTRIAL APPLICABILITY

According to the rubber composition of the present disclosure, a sufficient conductivity can be maintained even when a molded body formed from the rubber composition is deformed by, for example, bending it or the like while both excellent flexibility and conductivity are provided.

Further, according to the rubber composition of the present disclosure, an electrode which is excellent in flexibility and conductivity and can maintain a sufficient conductivity even when it is deformed by bending it or the like can be provided.

**Claims**

1. A rubber composition comprising a silicone rubber and a conductive filler,

   wherein a content of the conductive filler in the rubber composition is 0.5 to 5 volume%,
   the conductive filler comprises carbon nanotubes having a length of greater than 5 μm, and
   a radius of gyration is 40 nm to 300 nm, the radius of gyration being determined by subjecting the rubber composition to ultra-small angle X-ray scattering to obtain a scattering curve, and analyzing the scattering curve with the Beaucage model.

2. The rubber composition according to claim 1, wherein the silicone rubber is a liquid silicone rubber having a viscosity of 0.1 to 1,000 mPa·s at 25 °C.

3. The rubber composition according to claim 1 or 2, wherein the carbon nanotubes exhibit a convex upward shape in a t-plot obtained from an adsorption isotherm.

4. The rubber composition according to any one of claims 1 to 3, wherein the carbon nanotubes comprise single-walled carbon nanotubes.

5. The rubber composition according to any one of claims 1 to 4, wherein the conductive filler further comprises a metal-based conductive material.

6. The rubber composition according to any of claims 1 to 5 being a crosslinked rubber product after being subjected to crosslinking.

7. The rubber composition according to any of claims 1 to 5 being an uncrosslinked rubber composition before being subjected to crosslinking.

8.  An electrode formed from the composition according to claim

## INTERNATIONAL SEARCH REPORT

| International application No. |
| --- |
| PCT/JP2021/003602 |

### A. CLASSIFICATION OF SUBJECT MATTER

C08L 83/04(2006.01)i; H01B 1/04(2006.01)i; H01B 1/24(2006.01)i; H01B 5/16(2006.01)i; C08K 3/04(2006.01)i; C08K 3/08(2006.01)i
FI: C08L83/04; C08K3/08; C08K3/04; H01B1/24 A; H01B1/04; H01B5/16

According to International Patent Classification (IPC) or to both national classification and IPC

### B. FIELDS SEARCHED

Minimum documentation searched (classification system followed by classification symbols)
C08L83/04; H01B1/04; H01B1/24; H01B5/16; C08K3/04; C08K3/08

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| A | WO 2016/136275 A1 (ZEON CORP.) 01 September 2016 (2016-09-01) | 1–8 |
| A | JP 2018-103586 A (ZEON CORP.) 05 July 2018 (2018-07-05) | 1–8 |
| A | JP 2018-135492 A (NAGASE CHEMTEX CORP.) 30 August 2018 (2018-08-30) | 1–8 |

☐ Further documents are listed in the continuation of Box C.      ☒ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 March 2021 (31.03.2021) | 13 April 2021 (13.04.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/003602

| Patent Documents referred in the Report | Publication Date | Patent Family | Publication Date |
|---|---|---|---|
| WO 2016/136275 A1 | 01 Sep. 2016 | US 2018/0044498 A1<br>EP 3272811 A1<br>CN 107250279 A<br>KR 10-2017-0124540 A | |
| JP 2018-103586 A | 05 Jul. 2018 | (Family: none) | |
| JP 2018-135492 A | 30 Aug. 2018 | KR 10-2018-0097461 A | |

Form PCT/ISA/210 (patent family annex) (January 2015)

**EP 4 101 897 A1**

**Patent documents cited in the description**

- WO 2016136275 A

- WO 2006011655 A1